# EUROPEAN PATENT APPLICATION

(11) **EP 1 582 471 A1**
(43) Date of publication of application: **05.10.2005**
(21) Application number: 05251721.6
(22) Date of filing: 22.03.2005
(51) Int. Cl.: B65D 1/26, B29C 45/00

(54) **Injection molding of nestable thin-wall plastic products**

(30) Priority: 31.03.2004 US 814320
(71) Applicant: Regatta Limited, Cayman Islands (KY)
(72) Inventor: Brown, Paul Philip, Ramona, California 92065 (US); Sorensen, Jens Ole, Rancho Sante Fe, California 92067 (US)
(74) Representative: Gray, James

(57) **Abstract**

A mold cavity for injection molding a nestable plastic product (10, 10a) includes a sidewall section that includes a plurality of primary flow guides (30) for directing injected fluid plastic material into portions of the sidewall section between the primary flow guides, which include narrow mold cavity sections (34) for forming thin sidewall segments (20) of the product and further include secondary flow guides (36) for directing injected fluid plastic material into the narrow mold cavity sections. The sidewall (16) of the product includes a plurality of steps (24) that offset at least some of the thin sidewall segments from one another and the mold cavity includes a corresponding plurality of step sections (38) that offset the narrow mold cavity sections from one another for forming the steps. At least some of the step sections include at least some of the secondary flow guides.

## Description

The present invention generally pertains to injection molding of plastic products and is particularly directed to injection molding of nestable thin-wall plastic products that are formed in a mold cavity that includes flow guides for directing injected plastic material into narrow portions of a sidewall section of the mold cavity.

Mold cavities having flow guides are described in United States Patent No. 4,467,994 to Jens Ole Sorensen and suggested by United States Patent No. 3,944,124 to Gunter Hexel.

The present invention provides a mold for injection molding a nestable plastic product having a base wall, a rim and a sidewall, wherein the sidewall extends between the base wall and the rim, the mold comprising: a plurality of mold parts for configuring a mold cavity for forming the product and at least one gate from which fluid plastic material may be injected into the mold cavity, wherein the mold cavity comprises a base-wall section for forming the base wall, a rim section for forming the rim and a sidewall section for forming the sidewall; wherein the sidewall section includes a plurality of primary flow guides extending at least between the vicinity of the base-wall section and the vicinity of the rim section for directing injected fluid plastic material into portions of the sidewall section between the primary flow guides; wherein the portions of the sidewall section between the primary flow guides include narrow mold cavity sections for forming thin sidewall segments and further include secondary flow guides for directing injected fluid plastic material into the narrow mold cavity sections; wherein the sidewall includes a plurality of steps that offset at least some of the thin sidewall segments from one another and the mold cavity includes a corresponding plurality of step sections that offset the narrow mold cavity sections from one another for forming the steps; and wherein at least some of the step sections include at least some of the secondary flow guides.

The present invention also provides a process of injection molding a nestable plastic product having a base wall, a rim and a sidewall, wherein the sidewall extends between the base wall and the rim, the process comprising the steps of: (a) combining a plurality of mold parts to configure the mold of the present invention; and (b) injecting fluid plastic material from the gate into the mold cavity to form the product;

The present invention further provides a nestable plastic product comprising a base wall, a rim and a sidewall, that extends between the base wall and the rim, wherein sidewall comprises: a plurality of primary ribs extending at least between the vicinity of the base wall and the vicinity of the rim; a plurality of thin sidewall segments between the primary ribs; a plurality of secondary ribs adjoining at least some of the thin sidewall segments, wherein the primary and secondary ribs are thicker than the thin sidewall segments; and a plurality of steps that offset at least some of the adjoined thin sidewall segments from one another; wherein at least some of the steps include at least some of the secondary ribs.

Additional features of the present invention are described with reference to the detailed description of the preferred embodiments.

FIG. 1 is a side view of one preferred embodiment of a plastic product according to the present invention, with the right front quadrant cut away.

FIG. 2 is a side view of another preferred embodiment of a plastic product according to the present invention, with the right front quadrant cut away.

FIG. 2A shows an alternative embodiment of the arrangement of the extension of the secondary ribs from the primary ribs in comparison with such arrangement in the embodiment of FIG. 2, in which portion 2A is circled to aid such comparison.

FIG. 3 is a sectional view of the lower portion of the sidewall and the outer bottom portion of the base wall of two nested products according to FIG. 1.

FIG. 3A is a sectional view of the top portion of the sidewall and the rim portion of two nested products according to FIG. 1.

FIG. 4 is a see-through side view of a portion of the sidewall section of a mold cavity for forming the product of FIG. 1.

FIG. 5 is a sectional view of the portion of the sidewall section of the mold cavity taken through a primary flow guide.

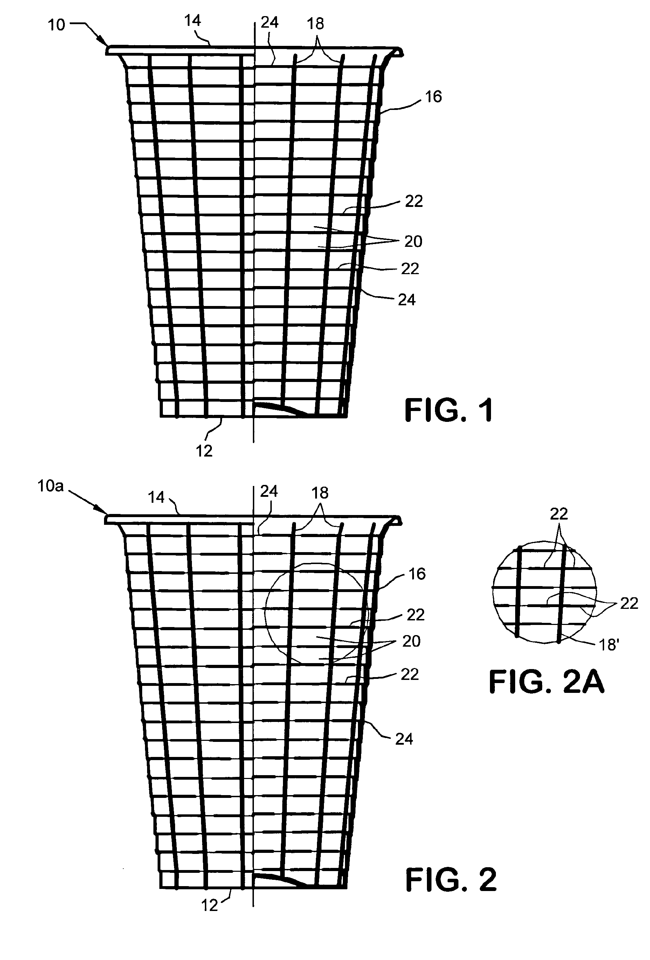

Referring to FIGS. 1, 2 and 3, a preferred embodiment of a nestable product 10, 10a according to the present invention includes a base wall 12, a rim 14 and a sidewall 16. The sidewall 16 extends between the base wall 12 and the rim 14.

The sidewall 16 includes a plurality of primary ribs 18 extending at least between the vicinity of the base-wall 12 and the vicinity of the rim 14; a plurality of thin sidewall segments 20 between the primary ribs 18; and a plurality of secondary ribs 22 adjoining at least some of the thin sidewall segments 20. The primary ribs 18 and the secondary ribs 22 are thicker than the thin sidewall segments 20.

The sidewall 16 further includes a plurality of steps 24 that offset at least some of the adjoined thin sidewall segments 20 from one another. At least some of the steps 24 include at least some of the secondary ribs 22.

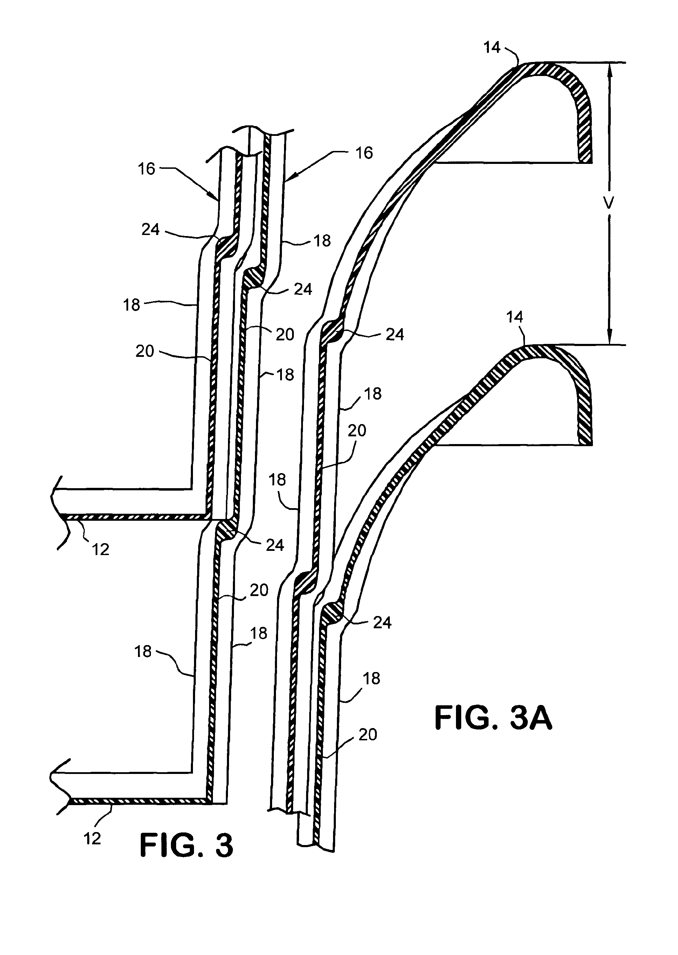

The steps 24 of the container 10 are spaced apart from one another by a dimension approximating but less than the nesting height of the product 10. The nesting height of the product 10 is the vertical distance V between the rims 14 of adjacent nested products 10, as shown in FIG. 3A.

In the preferred embodiments, the steps 24 are perimetric and the perimeters of the steps 24 are in planes that are parallel with the plane of the base wall 12.

The steps 24 have an upward slope. In the preferred embodiments, the steps 24 have an upward slope of approximately forty-five-degrees and the thin sidewall segments 20 and the portions of the primary ribs 18 between the steps 24 have an upward slope of approximately eighty-eight-degrees.

At least some of the secondary ribs 22 extend from the primary ribs 18. In the embodiment of FIG. 1, each of the secondary ribs 22 extends between two of the primary ribs 18. In another embodiment, as shown in FIGS. 2 and 2A, each of the secondary ribs 22 extends from only one of the primary ribs 18.

In one version of this other embodiment, as shown in FIG. 2, every other secondary rib 22 extends from a primary rib 18 on the opposite side of the thin sidewall segments 20 adjoining the secondary ribs 18 from the primary rib 18 from which the remaining secondary ribs 22 extend.

In another version of this other embodiment, as shown in FIG. 2A, two secondary ribs 22 at the same step level extend from the same primary rib 18 at alternating step levels.

In other embodiments (not shown), some of the secondary ribs extend between two of the primary ribs and some of the secondary ribs extend from only one of the primary ribs.

A mold for injection molding a nestable plastic product according to the present invention includes a plurality of mold parts for configuring a mold cavity for forming the product and at least one gate from which fluid plastic material may be injected into the mold cavity. The mold cavity includes a base-wall section for forming the base wall, a rim section for forming the rim and a sidewall section for forming the sidewall.

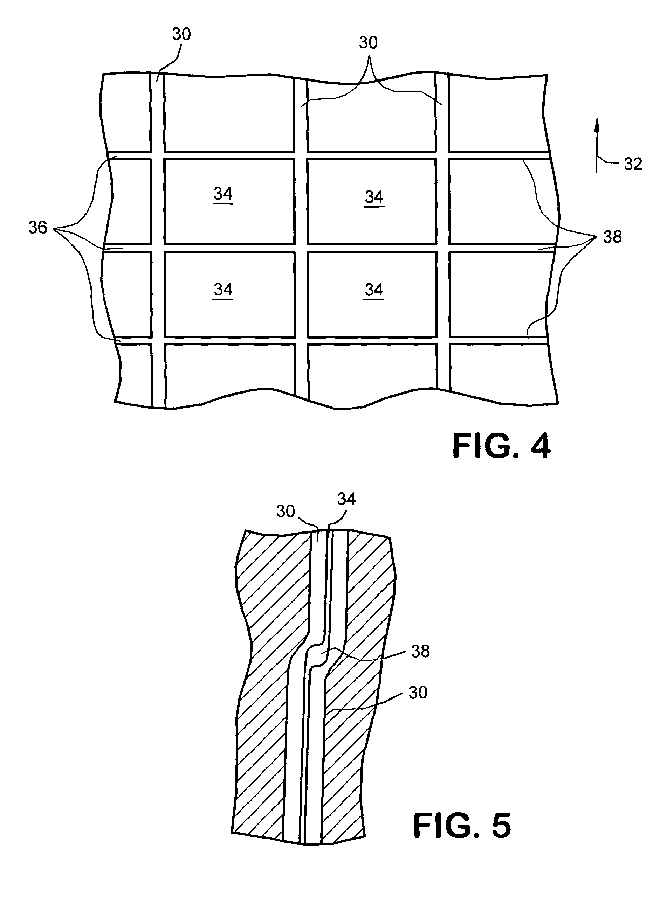

Referring to FIGS. 4 and 5, the sidewall section of a preferred embodiment of the mold according to the present invention includes a plurality of primary flow guides 30 extending at least between the vicinity of the base-wall section and the vicinity of the rim section for directing injected fluid plastic material into portions of the sidewall section between the primary flow guides. The primary ribs 18 of the product 10 are formed by the primary flow guides 30. The direction of plastic flow within the primary flow guides 30 is indicated by the arrow 32 in FIG. 4.

The portions of the sidewall section between the primary flow guides 30 include narrow mold cavity sections 34 for forming thin sidewall segments 20 of the product 10, 10a and further include secondary flow guides 36 for directing injected fluid plastic material into the narrow mold cavity sections 36. The secondary ribs 22 of the product 10, 10a are formed by the secondary flow guides 36.

In order to form the plurality of steps 24 in the sidewall 16 of the product 10, 10a the sidewall section of the mold cavity includes a corresponding plurality of step sections 38 that offset the narrow mold cavity sections 34 from one another. At least some of the step sections 38 include at least some of the secondary flow guides 36.

A preferred embodiment of the sidewall section of the mold cavity further includes a void-based-irregularity-formation-prevention-feature, which is described in United States Patent No. 6,599,460 to Paul Philip Brown and Jens Ole Sorensen, the disclosure of which is incorporated herein by reference thereto.

A preferred embodiment of the mold cavity is further described in United States Patent Application Publication No. US-2003-0132551-A1 and United States Patent Application No. 10/715,618, filed November 18, 2003, the respective disclosures of which are incorporated herein by reference thereto. The position of the gate may be other than as shown in the '551 publication.

A preferred embodiment of the rim section of the mold cavity is described in United States Patent Application No. 10/283,979 filed October 30, 2002, the disclosure of which is incorporated herein by reference thereto. Publication of the '979 application is projected for May 5, 2004.

The preferred plastic material used for injection molding the product is polypropylene. Alternatively other plastic materials may be so used.

In alternative embodiments of the present invention (not shown) not all of the features of the above described preferred embodiments are included. For example, in some alternative embodiments (a) the product is other than a cup; (b) the sidewall of the product does not have a generally circular contour; (c) at least some of the steps are not spaced apart from one another by a dimension approximating the nesting height of the product; (d) the steps are not perimetric; and/or the steps do not have an upward slope; (e) the perimeters of at least some of the steps are not in planes that are parallel with the plane of the base wall; (f) the rim does not have to be in a plane; and (g) the base and/or the side walls can have apertures.

The documents that are incorporated herein by reference thereto do not necessarily use the same terminology as used herein.

The benefits of the present invention may include easy release of the product from the mold, a reduced injection pressure requirement, easy separation of a product from a nest of products and a low nesting height. Also the steps on the sidewall enhance the rigidity of the product.

The benefits specifically stated herein do not necessarily apply to every conceivable embodiment of the present invention. Further, such stated benefits of the present invention are only examples and should not be construed as the only benefits of the present invention.

While the above disclosure contains many specificities that may or may not be common to all of the embodiments described herein, these specificities are not to be construed as limitations on the scope of the present invention, but rather as examples of the preferred embodiments described herein. Other variations are possible and the scope of the present invention should be determined not by the embodiments described herein but rather by the claims and their legal equivalents. The claims require no implicit limitations. Each claim is to be construed explicitly as stated, or by its legal equivalent.

## Claims

1. A mold for injection molding a nestable plastic product (10, 10a) having a base wall (12), a rim (14) and a sidewall (16), wherein the sidewall extends between the base wall and the rim, the mold comprising:
a plurality of mold parts for configuring a mold cavity for forming the product and at least one gate from which fluid plastic material may be injected into the mold cavity,
wherein the mold cavity comprises a base-wall section for forming the base wall, a rim section for forming the rim and a sidewall section for forming the sidewall;
wherein the sidewall section includes a plurality of primary flow guides (30) extending at least between the vicinity of the base-wall section and the vicinity of the rim section for directing injected fluid plastic material into portions of the sidewall section between the primary flow guides;
wherein the portions of the sidewall section between the primary flow guides include narrow mold cavity sections (34) for forming thin sidewall segments (20) and further include secondary flow guides (36) for directing injected fluid plastic material into the narrow mold cavity sections;
wherein the sidewall includes a plurality of steps (24) that offset at least some of the thin sidewall segments from one another and the mold cavity includes a corresponding plurality of step sections (38) that offset the narrow mold cavity sections from one another for forming the steps; and
wherein at least some of the step sections include at least some of the secondary flow guides.

2. A mold according to Claim 1, wherein the steps are spaced apart from one another by a dimension approximating but less than the nesting height of the product.

3. A mold according to Claim 1, wherein the steps are perimetric.

4. A mold according to Claim 1, wherein the steps are perimetric and the perimeters of the steps are in planes that are parallel with the plane of the base wall.

5. A mold according to Claim 1, wherein the steps have an upward slope.

6. A mold according to Claim 1, wherein the steps have an upward slope of approximately forty-five-degrees and the thin sidewall segments have an upward slope of approximately eighty-eight-degrees.

7. A mold according to Claim 1, wherein at least some of the secondary flow guides extend from the primary flow guides.

8. A mold according to Claim 7, wherein at least some of the secondary flow guides extend between two of the primary flow guides.

9. A mold according to Claim 7, wherein at least some of the secondary flow guides extend from only one of the primary flow guides.

10. A process of injection molding a nestable plastic product (10, 10a) having a base wall (12), a rim (14) and a sidewall (16), wherein the sidewall extends between the base wall and the rim, the process comprising the steps of:
(a) combining a plurality of mold parts to configure a mold cavity for forming the product and at least one gate from which fluid plastic material may be injected into the mold cavity; and
(b) injecting fluid plastic material from the gate into the mold cavity to form the product;
wherein the mold cavity comprises a base-wall section for forming the base wall, a rim section for forming the rim and a sidewall section for forming the sidewall;
wherein the sidewall section includes a plurality of primary flow guides (30) extending at least between the vicinity of the base-wall section and the vicinity of the rim section for directing injected fluid plastic material into portions of the sidewall section between the primary flow guides;
wherein the portions of the sidewall section between the primary flow guides include narrow mold cavity sections (34) for forming thin sidewall segments (20) and further include secondary flow guides (36) for directing injected fluid plastic material into the narrow mold cavity sections;
wherein the sidewall includes a plurality of steps (24) that offset at least some of the thin sidewall segments from one another and the mold cavity includes a corresponding plurality of step sections (38) that offset the narrow mold cavity sections from one another for forming the steps; and
wherein at least some of the step sections include at least some of the secondary flow guides.

11. A process according to Claim 10, wherein the steps are spaced apart from one another by a dimension approximating but less than the nesting height of the product.

12. A process according to Claim 10, wherein the steps are perimetric.

13. A process according to Claim 10, wherein the steps are perimetric and the perimeters of the steps are in planes that are parallel with the plane of the base wall.

14. A process according to Claim 10, wherein the steps have an upward slope.

15. A process according to Claim 10, wherein the steps have an upward slope of approximately forty-five-degrees and the thin sidewall segments have an upward slope of approximately eighty-eight-degrees.

16. A process according to Claim 10, wherein at least some of the secondary flow guides extend from the primary flow guides.

17. A process according to Claim 16, wherein at least some of the secondary flow guides extend between two of the primary flow guides.

18. A process according to Claim 16, wherein at least some of the secondary flow guides extend from only one of the primary flow guides.

19. A nestable plastic product (10, 10a) having a base wall (12), a rim (14) and a sidewall (16) that extends between the base wall and the rim, wherein the sidewall comprises:
a plurality of primary ribs (18) extending at least between the vicinity of the base wall and the vicinity of the rim;
a plurality of thin sidewall segments (20) between the primary ribs;
a plurality of secondary ribs (22) adjoining at least some of the thin sidewall segments, wherein the primary and secondary ribs are thicker than the thin sidewall segments; and
a plurality of steps (24) that offset at least some of the adjoined thin sidewall segments from one another;
wherein at least some of the steps include at least some of the secondary ribs.

20. A product according to Claim 19, wherein the steps are spaced apart from one another by a dimension approximating but less than the nesting height of the product.

21. A product according to Claim 19, wherein the steps are perimetric and the perimeters of the steps are in planes that are parallel with the plane of the base wall.

22. A product according to Claim 19, wherein the steps are perimetric.

23. A product according to Claim 19, wherein the steps have an upward slope.

24. A product according to Claim 19, wherein the steps have an upward slope of approximately forty-five-degrees and the thin sidewall segments have an upward slope of approximately eighty-eight-degrees.

25. A product according to Claim 19, wherein at least some of the secondary ribs extend from the primary ribs.

26. A product according to Claim 25, wherein at least some of the secondary ribs extend between two of the primary ribs.

27. A product according to Claim 25, wherein at least some of the secondary ribs extend from only one of the primary ribs.
